(19) Europäisches Patentamt
European Patent Office
Office européen des brevets

(11) **EP 2 353 388 A1**

(12) **EUROPEAN PATENT APPLICATION**

(43) Date of publication:
**10.08.2011 Bulletin 2011/32**

(21) Application number: **10151952.8**

(22) Date of filing: **28.01.2010**

(51) Int Cl.:
*A01N 43/76* (2006.01)  *A01N 43/90* (2006.01)
*A01P 7/02* (2006.01)  *A01P 7/04* (2006.01)
*A01P 5/00* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **Syngenta Participations AG**
  **4058 Basel (CH)**
• **Kyoyu Agri Co. Ltd.**
  **Takatsu-ku**
  **Kawasaki-shi**
  **Kanagawa 213-0002 (JP)**

(72) Inventor: **The designation of the inventor has not yet been filed**

(74) Representative: **Arunasalam, Velautha-Cumaran et al**
**Syngenta Crop Protection Münchwilen AG**
**Intellectual Property**
**Schaffhauserstrasse**
**4332 Stein (CH)**

(54) **Insecticidal composition**

(57) A method of controlling or preventing damage to a plant, which comprises applying to the plant, part of a plant, plant organ, and/or plant propagation material thereof, or surrounding area thereof thereof a combination comprising (I) abamectin, and (II) etoxazole, in any desired sequence or simultaneously.

EP 2 353 388 A1

EP 2 353 388 A1

**Description**

The present invention relates to the use of a defined combination of pesticidal active ingredients, and compositions thereof, and methods for using such combinations in the control or prevention of damage to a plant, or propagation material thereof.

Certain active ingredients, agents and combinations are described in the literature for improving the plant growth; however, the efficacy of such known uses do not always satisfy the needs of agricultural practice in many incidents and aspects. There is a continuing need to provide improved combinations, which provide better, for example, biological properties, for example, synergistic properties, especially for controlling pests. Further, biological properties of the known combinations are not entirely satisfactory in the areas of pest control, phytotoxicity, and environmental and worker exposure, for example. In particular, in the instance a pest has become, or risks becoming resistant to the known compositions or active ingredients, improved methods of control or prevention are sought.

In a particular embodiment, the protection of plant propagation materials (especially seeds) with ingredients are target applications which partially address the need for a reduction of environmental and worker exposure when used alone or in conjunction with foliar or in-furrow active ingredient applications.

It is now been found that a particular combination of active ingredients provide unexpected control or prevention of damage by pests to a plant, when the particular ingredients of the defined combination is applied, in any desired sequence or simultaneously, on the plant, part of a plant, plant organ, plant propagation material, or surrounding area thereof.

Accordingly, in a first aspect the present invention provides a method of controlling or preventing damage to a plant, which comprises applying to the plant, part of a plant, plant organ, and/or plant propagation material thereof, or surrounding area thereof thereof a combination comprising (I) abamectin, and (II) etoxazole, in any desired sequence or simultaneously.

In a second aspect the present invention provides a method of improving the growth of a plant by applying to the plant, part of a plant, plant organ, plant propagation material, or surrounding area thereof a combination, as defined in the first aspect, in any desired sequence or simultaneously.

In a further aspect, the present invention relates to a method of protecting a plant propagation material by applying to the plant propagation material a combination, as defined in the first aspect, in any desired sequence or simultaneously.

The invention also relates to a plant propagation material treated with the combination defined in the first aspect.

Further, in an embodiment the present invention relates to a method which comprises (i) treating a plant propagation material, such as a seed, with a combination as defined in the first aspect, and (ii) planting or sowing the treated propagation material, wherein the combination protects against pest damage of the treated plant propagation material, or part of plant, plant organ and/or plant grown from the treated propagation material.

Also, in an embodiment the present invention relates to a method which comprises (i) treating a plant propagation material, such as a seed, with a combination as defined in the first aspect, and (ii) planting or sowing the treated propagation material, and (iii) achieving protection against pest damage of the treated plant propagation material, or part of plant, plant organ and/or plant grown from the treated propagation material.

Damage to a plant is generally caused by pests, such as insects, fungi, weeds, etc, and so the control and prevention of damage to a plant generally involves control of the pests.

The combination defined in the first aspect is suitable for control of pests selected from the class Insecta, Arachnida and/or Nematoda.

The combination according to the invention is effective in combating pests, such as insects, young insects, infant insects and eggs of insects and can be applied directly to pests or to places where they are living. The pests controlled by the combination according to the invention include agricultural/horticultural pests, sanitary insect pests, stored grain insect pests, clothes pests and household pests.

The combination of the invention can be used in the agricultural sector and related fields of use for controlling or preventing pest damage on plants.

In an embodiment of any aspects of the invention, (I) and (II) are applied simultaneously.

Controlling, preventing or protecting and its inflections, within the context of the present invention, mean reducing any undesired effect, such as

- pest infestation or attack of, and
- pest damage on,

a plant, part of the plant or plant propagation material to such a level that an improvement is demonstrated.

The combination can demonstrate synergistic activity compared to activity of compounds alone.

The pesticidal combination according to the invention has very advantageous properties for protecting plants against pest attack or damage; particularly in the instance of plants, the present invention can control or prevent pest damage on a plant, plant organs, or plant propagation material.

These properties are for example the synergistically enhanced actions of the combination of the compounds (I) and (II) resulting in lower pest damage, lower rates of application, or a longer duration of action. In the instance of agriculture, the enhanced actions are found to show an improvement in the growing characteristics of a plant by, for example, higher than expected control of pest damage, greater growth characteristics of the plant, greater yield of the crop of the plant, greater stand of the plant.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may not be connected to the control of pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant, as described above, or both the yield and the vigor of the plant.

Accordingly, the present invention also provides a method of improving the growing characterictics of a plant, which comprises applying to the plant the combination, as defined in the first aspect, in any desired sequence or simultaneously.

In a preferred embodiment the combination is in the form of a composition, which composition further comprises one or more customary formulation auxiliaries. In a preferred embodiment, the composition is in the form of a pre-mix formulated composition.

Accordingly, in a further aspect, the present invention provides a composition comprising (I) abamectin and (II) etoxazole. In an embodiment, the composition is in the form of a formulated pre-mix composition comprising (I) and (II), as defined in the first aspect, and one or more customary formulation auxilares.

Examples of pests controlled by the combination according to the invention are pests selected from the class Insecta, Arachnida and Nematoda. Examples of such pests include: from the order Lepidoptera, for example, Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina spp., Chilo spp., Choristoneura spp., Clysia ambiguella, Cnaphalocrocis spp., Cnephasia spp., Cochylis spp., Coleophora spp., Crocidolomia spp., Cryptophlebia leucotreta, Crysodeixis includens, Cydia spp., Diatraea spp., Diparopsis castanea, Earias spp., Elasmopalpus spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Phyllocnistis spp, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.; from the order Coleoptera, for example, Agriotes spp., Anthonomus spp., Atomaria linearis, Ceutorhynchus spp., Chaetocnema tibialis, Cosmopolites spp., Curculio spp., Dermestes spp., Diabrotica spp., Epilachna spp., Eremnus spp., Gonocephalum spp., Heteronychus spp., Leptinotarsa decemlineata, Lissorhoptrus spp., Melolontha spp., Orycaephilus spp., Otiorhynchus spp., Phlyctinus spp., Phyllotreta spp., Popillia spp., Protostrophus spp., Psylliodes spp., Rhizopertha spp., Scarabeidae, Sitophilus spp., Sitotroga spp., Tenebrio spp., Tribolium spp. and Trogoderma spp.; from the order Orthoptera, for example, Blatta spp., Blattella spp., Gryllotalpa spp., Leucophaea maderae, Locusta spp., Periplaneta spp. and Schistocerca spp.; from the order Isoptera, for example, Reticulitermes spp.; from the order Psocoptera, for example, Liposcelis spp.; from the order Anoplura, for example, Haematopinus spp., Linognathus spp.,

Pediculus spp., Pemphigus spp. and Phylloxera spp.; from the order Mallophaga, for example, Damalinea spp. and Trichodectes spp.; from the order Thysanoptera, for example, Frankliniella spp., Hercinothrips spp., Ponticulothrips diospyrosi, Taeniothrips spp., Thrips palmi, Thrips tabaci, Scirtothrips aurantii and Scirtothrips dorsalis; from the order Heteroptera, for example, Dichelops melacanthus, Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.; from the order Homoptera, for example, Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri; from the order Hymenoptera, for example, Acromyrmex, Athalia rosae, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.; from the order Diptera, for example, Antherigona soccata, Bibio hortulanus, Ceratitis spp., Chrysomyia spp., Culex spp., Cuterebra spp., Dacus spp., Delia spp., Drosophila melanogaster, Liriomyza spp., Melanagromyza spp., Orseolia spp., Oscinella frit, Pegomyia hyoscyami, Phorbia spp., Rhagoletis pomonella, Sciara spp.; from the order Acarina, for example, Acarus siro, Acaphylla theavagrans, Aceria sheldoni, Aculps pelekassi, Aculus fockeui, Aculus schlechtendali, Amblyomma spp., Argas spp., Brevipalpus spp., Bryobia praetiosa, Calacarus carinatus, Calipitrimerus spp., Chorioptes spp., Dermanyssus gallinae, Eotetranychus carpini, Eriophyes spp. (such as Eriophyes chibaensis), Hyalomma spp., Olygonychus pratensis, Ornithodoros spp., Panonychus spp. (such as Panonychus citri, Panonychus mori and Panonychus ulmi), Phyllocoptruta spp. (such as Phyllocoptruta oleivora), Polyphagotarsonemus latus, Psoroptes spp., Rhipicephalus spp., Rhizoglyphus spp., Sarcoptes spp., Tarsonemus spp. and Tetranychus spp. (such as Tetranychus kanzawai and Tetranychus urticae); and from the class Nematoda, for example, the species of Meloidogyne spp. (for example, Meloidogyne incoginita and Meloidogyne javanica), Heterodera spp. (for example, Heterodera glycines, Heterodera schachtii, Heterodora avenae and Heterodora trifolii), Globodera spp. (for example, Globodera rostochiensis), Radopholus spp. (for example, Radopholus similes), Rotylenchulus spp., Pratylenchus spp. (for example, Pratylenchus neglectans and Pratylenchus penetrans), Aphelenchoides spp., Helicotylenchus spp., Hoplolaimus spp., Paratrichodorus spp., Longidorus spp., Nacobbus spp., Subanguina spp. Belonlaimus spp., Criconemella spp., Criconemoides spp. Ditylenchus spp., Dolichodorus spp., Hemicriconemoides spp., Hemicycliophora spp., Hirschmaniella spp., Hypsoperine spp., Macroposthonia spp., Melinius spp., Punctodera spp., Quinisulcius spp., Scutellonema spp., Xiphinema spp., and Tylenchorhynchus spp.

In particular the combination is suitable for control of one or more of Adoxophyes spp., Archips spp., Heliothis spp., Lyonetia spp., Pieris rapae, Plutella xylostella, Frankliniella spp., Thrips palmi, Thrips tabaci, Scirtothrips dorsalis, Aphis spp., Bemisia tabaci, Eriosoma larigerum, Myzus spp., Liriomyza spp., Acaphylla theavagrans, Aculps pelekassi, Aculus fockeui, Aculus schlechtendali, Calacarus carinatus, Eriophyes chibaensis, Panonychus citri, Panonychus ulmi, Phyllocoptruta spp., Tetranychus kanzawai, Tetranychus urticae, Polyphagotarsonemus latus, Tarsonemus spp., Tetranychus kanzawai and Tetranychus urticae.

In particular, the combination can be effective against pests, such as Adoxophyes spp., Plutella xylostella, Frankliniella spp., Thrips palmi, Thrips tabaci, Scirtothrips dorsalis, Aphis spp., Myzus spp., Liriomyza spp., Panonychus citri, Panonychus ulmi, Tetranychus kanzawai and Tetranychus urticae, which become resistant against agrochemicals, such as acephate, chlorpyrifos, methiodathion, phenthoate, thiodicarb, methomyl, diflubenzuron, teflubenzuron, imidacloprid, flucythrinate, etofenprox, fenbutatin oxide, clofentezine, pyrimidifen, hexythiazox, pyridaben and fenpyroximate, by changing their genetic nature through mutation and/or by near crossbreeding.

The combination is especially suitable for the pests Panonychus citri, Panonychus ulmi, Tetranychus kanzawai, and Tetranychus urticae, which can be sensitive or built up resistance against certain agrochemicals.

Each of the combinations of the invention can be formulated for a particular use. Preferably, each combination is formulated for protecting cultivated plants or their propagation materials. Accordingly, each combination of the invention can be applied to the plant in a conventional manner, such as foliar spray. Advantageously, each of the combinations are formulated for plant propagation material, such as seed, treatment applications for improving the growth of a plant derived from the treated material (or seed), for example, by controlling or preventing damage by pests, which are found in agriculture and forestry, and can particularly damage the plant in the early stages of its development.

Further, the present invention also envisages soil application of the combinations of the invention to control the soil-dwelling pests. Methods of applying to the soil can be via any suitable method, which ensures that the combination penetrates the soil, for example, nursery tray application, in furrow application, soil drenching, soil injection, drip irrigation, application through sprinklers or central pivot, incorporation into soil (broad cast or in band) are such methods.

The benefits from the invention can also be achieved either by (i) treating plant propagation material with a combinaton or (ii) applying to the locus where control is desired, generally the planting site, the combination, or both (i) and (ii). Indeed, the benefits from the invention can also be achieved by treating plant propagation material with one or more of the ingredients of the combinaton, and then applying to the locus where control is desired with the other ingredient (s) of the combination.

The term "plant propagation material" is understood to denote all the generative parts of the plant, such as seeds, which can be used for the multiplication of the latter and vegetative plant materials such as cuttings and tubers (for example, potatoes). Accordingly, as used herein, part of a plant includes propagation material. There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Parts of plant and plant organs that grow at later point in time are any sections of a plant that develop from a plant propagation material, such as a seed. Parts of plant, plant organs, and plants can also benefit from the pest damage protection achieved by the application of each combination on to the plant propagation material. In an embodiment, certain parts of a plant and certain plant organs that grow at later point in time can also be considered as plant propagation material, which can themselves be applied (or treated) with the combination; and consequently, the plant, further parts of the plant and further plant organs that develop from the treated parts of plant and treated plant organs can also benefit from the pest damage protection achieved by the application of each combinations on to the certain parts of plant and certain plant organs.

Methods for applying or treating pesticidal active ingredients and mixtures thereof on to plant propagation material, especially seeds, are known in the art, and include dressing, coating, pelleting and soaking application methods of the propagation material. Such methods are also applicable to the combinations according to the invention. In a preferred embodiment, the combination is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and alike.

It is preferred that the plant propagation material is a seed.

Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the ingredients in the combination and adherence thereof to the seeds is desired during propagation material treatment. Treatment could vary from a thin film (dressing) of the formulation containing the combination, for example, a mixture of active ingredient(s), on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the combination. In particular, seed coating or seed pelleting are preferred in the treatment of the combinations according to the invention. As a result of the treatment, the ingredients in each combination are adhered on to the seed and therefore available for pest control.

The treated seeds can be stored, handled, sowed and tilled in the same manner as any other active ingredient treated seed.

The combination according to the present invention is suitable for plants of the crops: cereals, such as wheat, barley, rye, oats, rice, maize (fodder maize and sugar maize / sweet and field corn) or sorghum; beet, such as sugar or fodder beet; fruit, for example pomaceous fruit, stone fruit, tree nut or soft fruit, such as apples, pears, plums, peaches, bananas, almonds, walnuts, pistachios, cherries or berries, for example strawberries, raspberries or blackberries; leguminous crops, such as beans, lentils, peas or soya; oil crops, such as oilseed rape, mustard, poppies, olives, sunflowers, coconut, castor, cocoa or ground nuts; cucurbits, such as pumpkins, marrow, cucumbers or melons; fibre plants, such as cotton, flax, hemp or jute; citrus fruit, such as oranges, mandarin oranges, lemons, grapefruit or tangerines; vegetables, such as spinach, lettuce, asparagus, cabbages, iceberg, carrots, onions, tomatoes, paprika, potatoes or bell peppers; Lauraceae, such as avocado, Cinnamonium or camphor; and also tobacco, nuts, coffee, eggplants, sugarcane, tea, pepper, grapevines, hops, the plantain family, latex plants, lawn, turf, fodder grass, and ornamentals, such as carnation, roses, chrysanthemum, petunias, geranium/pelargoniums, pansies and impatiens; and shrubs, broad-leaved trees and evergreens, such as conifers. In particular, the combination is suitable for soft fruit, leguminous crops, cucurbits, citrus fruits, Lauraceae and ornamentals.

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application.

The combination according to the present invention is particularly well suited for combating pests and crops; such as Panonychus ulmi, Tetranychus urticae and Aculus schlechtendali in apples, Eriophyes chibaensis, Panonychus citri, Panonychus mori, Panonychus ulmi, Tetranychus kanzawai and Tetranychus urticae in pears, Lyonetia clerkella, Panonychus mori, Tetranychus urticae and Aculus fockeui in peaches, Phyllocnistis citrella, Polyphagotarsonemus latus, Scirtothrips dorsalis, Panonychus citri and Aculps pelekassi in mandarin oranges, Calacarus carinatus, Tetranychus kanzawai, Polyphagotarsonemus latus and Acaphylla theavagrans in tea.

The weight ratio of active ingredient compounds in each combination is selected as to give the desired, for example, synergistic action. In an embodiment, the weight ratio of (I) to (II) is from 1:50 to 10:1, preferably 1:30 to 5:1, more preferably 1:15 to 3:1, especially 1:7 to 2:1.

The rates of application (use) of the combination vary, for example, according to type of use, type of crop, but is such that the active ingredients in the combination is an effective amount to provide the desired enhanced action (such as pest control) and can be determined by trials and routine experimentation known to one of ordinary skill in the art. Generally for foliar or soil treatments, application rates can vary from 0.05 to 3, preferably 0.1 to 1, kg per hectare (g/ha), of active ingredients (I) and (II).

In an embodiment, independent of other embodiments, (I) and (II) are applied at a rate of 0.1 to 120 g ai/ha and 50 to 1000 g ai/ha respectively, such as 0.1 to 100 g ai/ha of (I) and 75 to 900 g ai/ha of (II); in a preferred embodiment (I) and (II) are applied at a rate of 1 to 75 g ai/ha and 100 to 800 g ai/ha respectively, especially 2 to 60 g ai/ha and 125 to 600 g ai/ha respectively.

Generally for seed treatments, application rates can vary from 0.5 to 1000g / 100kg of seeds of ingredients. In an embodiment, compounds (I) and (II) are applied at a rate of 2 to 800g /100kg, preferably 10 to 650g /100kg, especially 50 to 500g /100kg of seeds of ingredients.

A single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

The combination of the present invention may be mixed or used with one or more other pesticides, such as other fungicides, insecticides, herbicides and nematicides. The use of additional active ingredients can be for reasons, for example, broader spectrum control (e.g. wider variety of pests, diseases, etc), lower rates, synergy and economy.

Examples of additional active ingredients can be bixafen, boscalid, tiadinil, amisulbrom, cyazofamid, benthiavalicarb, iprovalicarb, azoxystrobin, dimoxystrobin, fluoxastrobin, kresoxim-methyl, metominostrobin, orysastrobin, picoxystrobin, pyraclostrobin, trifloxystrobin, cyproconazole, diniconazole, diniconazole-M, epoxiconazole, fenbuconazole, fluquinconazolef, furconazole-cis, hexaconazole, imibenconazole, ipconazole, metconazole, myclobutanil, penconazole, prothioconazole, quinconazole, simeconazole, tebuconazole, tetraconazole, triticonazole, uniconazole, uniconazole-P, famoxadone, fenamidone, iprodione, penthiopyrad, benfuracarb, indoxacarb, furathiocarb, carbofuran, carbosulfan, decarbofuran, chlorantraniliprole, cyantraniliprole, flubendiamide, dimetilan, dinotefuran, imidacloprid, thiamethoxam, acetamiprid, thiacloprid, tebufenpyrad, tolfenpyrad, acetoprole, ethiprole, fipronil, pyraclofos, pyrafluprole, pyriprole, vaniliprole, bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron, triflumuron, chromafenozide, halofenozide, methoxyfenozide, tebufenozide, spirotetramat, spiromesifen, metaflumizone, pyridaben, spirodiclofen, milbemectin, lepimectin, spinosad, cyenopyrafen, bentazone, fentrazamide, diflufenican, S-metolachlor, pyrimisulfan, mesotrione, bensulfuron, dazomet, fosthiazate, Imbda cyhalothrin, tefluthrin, metalaxyl-M, fludioxonil, pacrobutrazole and cadusafos.

In the event one or more other pesticides are used in combination with the combination defined in the first aspect. The one or more other pesticides can be also applied to the plant or surrounding area thereof, wherein each other pesticide can be applied, independently of each other, prior to, simultaneously, or after the application of (I) and (II), and in the instance (I) and (II) are applied separately, each other pesticide can be applied, independently of each other, prior to, simultaneously, between or after the application of (I) and (II).

In an embodiment, the combination of the present invention further comprises one or more other pesticides; therefore, a composition comprises (I), (II) and one or more other pesticides.

The compounds of the combination (i.e. (I), and (II)), and any other pesticides, may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention. Generally, the compounds (I), and (II) are each in the form of a formulation composition with one or more of customary formulation auxiliaries.

Therefore, (I) and (II) can be used in the form of separate formulations. The compounds can be applied to the locus where control is desired either simultaneously or in succession at short interval, for example on the same day, if desired together with further carriers, surfactants or other application-promoting adjuvants customarily employed in formulation technology. In a preferred embodiment, (I) and (II) are applied simultaneously.

In the event compounds of the combination (i.e. (I), and (II)) are applied simultaneously in the present invention, they may be applied as a composition containing the combination, in which case each of (I), and (II) can be obtained from a separate formulation source and mixed together (known as a tank-mix, ready-to-apply, spray broth, or slurry), optionally with other pesticides, or (I), and (II) can be obtained as single formulation mixture source (known as a pre-mix, concentrate, formulated product), and optionally mixed together with other pesticides.

In an embodiment, the combination of the present invention is applied as a composition.

Accordingly, the present invention includes a composition comprising, as active ingredients, (I), and (II), and optionally other pesticides, and optionally one or more customary formulation auxiliaries; which may be in the form of a tank-mix or pre-mix composition.

In an embodiment, the combination of (I), and (II) is provided in the form of a pre-mix composition (or formulated product).

Alternative to the actual synergistic action with respect to pesticidal activity, the combinations according to the invention also can have surprising advantageous properties which can also be described, in a wider sense, as synergistic activity. Examples of such advantageous properties that may be mentioned are: advantageous behaviour during formulation and/or upon application, for example upon grinding, sieving, emulsifying, dissolving or dispensing; increased storage stability; improved stability to light; more advantageous degradability; improved toxicological and/or ecotoxicological behaviour; or any other advantages familiar to a person skilled in the art.

Examples of foliar formulation types for pre-mix compositions are:

GR: granules
WP: wettable powders
WG: water dispersable granules (powders)
SG: water soluble granules
SL: soluble concentrates
EC: emulsifiable concentrate
EW: emulsions, oil in water
ME: micro-emulsion
SC: aqueous suspension concentrate
CS: aqueous capsule suspension
OD: oil-based suspension concentrate, and
SE: aqueous suspo-emulsion.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries, including adjuvants.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Generally, a tank-mix formulation for foliar or soil application comprises 0.1 to 20%, especially 0.1 to 15 %, active ingredient compounds, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for foliar application comprises 0.1 to 99.9 %, especially 1 to 95 %, active ingredient compounds, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred pre-mix formulations of (I) and (II) together are aqueous suspension concentrates, emulsifiable concentrates and emulsion in water.

In an preferred embodiment, the combination of the invention is in the form of a formulated pre-mix composition, and in such an instance can therefore also be used in combination with other pesticides and pesticidal formulations, formulation auxiliaries, and adjuvants (a substance which in itself doesn't show pesticidal activity but enhances the activity of the pesticide - usually crop oil concentrates and surfactants). It is typical that the formulated pre-mix composition is used in combination with other components (for example, those mentioned above) in a tank-mix and applied to the field and/or plant.

Examples of adjuvants include branded products Penetrator, Adigor, Agora, Atplus 411 F, and also oil

In general, the pre-mix compositions of the invention contain 0.5 to 99.9 especially 1 to 95, advantageously 1 to 50 , %, by mass of active ingredient compounds, and 99.5 to 0.1, especially 99 to 5, %, by mass of a solid or liquid adjuvant (including, for example, a solvent such as water), where the auxiliaries (or adjuvant) can be a surfactant in an amount of 0 to 50, especially 0.5 to 40, %, by mass based on the mass of the pre-mix formulation.

In a preferred embodiment, the combination is in the form of a formulated pre-mix composition comprising (I) abamectin and (II) etoxazole, and one or more customary formulation auxiliaries.

The Examples which follow serve to illustrate the invention.

Formulation Examples

| Wettable powders | a) | b) | c) |
|---|---|---|---|
| active ingredients | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredients | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The active ingredient is thoroughly mixed with the adjuvants and the mixture is thoroughly ground in a suitable mill, affording powders that can be used directly for seed treatment.

| Emulsifiable concentrate | |
|---|---|
| active ingredients | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| active ingredients | 5 % | 6 % | 4 % |
| Talcum | 95 % | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

| Extruder granules | |
|---|---|
| active ingredients | 15 % |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

| Coated granules | |
|---|---|
| active ingredients | 8 % |
| polyethylene glycol (mol. wt. 200) | 3 % |
| Kaolin | 89 % |

The finely ground active ingredient is uniformly applied, in a mixer, to the kaolin moistened with polyethylene glycol. Non-dusty coated granules are obtained in this manner.

| Suspension concentrate | |
|---|---|
| active ingredients | 40 % |
| propylene glycol | 10 % |
| nonylphenol polyethylene glycol ether (15 mol of ethylene oxide) | 6 % |
| sodium lignosulfonate | 10 % |
| carboxymethylcellulose | 1 % |
| silicone oil (in the form of a 75 % emulsion in water) | 1 % |
| water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

| Flowable concentrate | |
|---|---|
| active ingredients | 40 % |
| propylene glycol | 5 % |
| copolymer butanol PO/EO | 2 % |
| tristyrenephenole with 10-20 moles EO | 2 % |
| 1,2-benzisothiazolin-3-one (in the form of a 20% solution in water) | 0.5 % |
| monoazo-pigment calcium salt | 5 % |
| silicone oil (in the form of a 75 % emulsion in water) | 0.2 % |
| water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Slow Release Capsule Suspension

28 parts of the combination, or of each of these compounds from (I), and (II) separately, are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed. The obtained capsule suspension is stabilized by adding 0.25 parts of a thickener and 3 parts of a dispersing agent. The capsule suspension formulation contains 28% of the active ingredients. The medium capsule diameter is 8-15 microns. The resulting formulation is applied to seeds as an aqueous suspension in an apparatus suitable for that purpose.

Using such formulations, either straight or diluted, plant can be treated and protected against damage, for example, from pest(s), by, for example, spraying, or pouring.

The active ingredient combination according to the invention is distinguished by the fact that they are especially well tolerated by plants and are environmentally friendly.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

Use of a term in a singular form also encompasses that term in plural form and vice a versa.

Abamectin and etoxazole are active ingredients for use in the agrochemical industry (also known as pesticides). A description of the other pesticides (e.g., fungicides, insecticides, nematicides) can be found in the e-Pesticide Manual, version 3.1, 13th Edition, Ed. CDC Tomlin, British Crop Protection Council, 2004-05.

The following Examples are given by way of illustration and not by way of limitation of the invention.

Examples

An unexpected effect exists whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967): ppm = milligrams of active ingredient (= a.i.) per liter of spray mixture

X = % action by active ingredient A) using p ppm of active ingredient
Y = % action by active ingredient B) using q ppm of active ingredient.

According to COLBY, the expected (additive) action of active ingredients A)+B) using p+q ppm of active ingredient is If the action actually observed (O) is greater than the expected action (E), then the action of the combination is super-additive, i.e. there is a synergistic effect.

Example 1: Two-spotted spider mite (Tetranychus urticae), sensitive strain to hexythiazox, pyridaben and/or fenpyroximate

Two-spotted spider mites (sensitive strain to hexythiazox, pyridaben and/or fenpyroximate) were allowed to oviposit on leaves of kidney beans for one day, and the female adults were then removed. The leaves were sprayed by a rotating application tower at 200 ml/m$^2$ of the predetermined concentration prepared from a product (e.g. the mixture according to the instant invention and the solo active ingredients). Seven days thereafter, the number of unhatched eggs and dead larvae was examined, whereby the live egg rate (%) was determined. The efficacy (observed %) against eggs and larvae is, therefore, calculated based on the following formula:

$$\text{The efficacy (observed \%)} = \left[ 1 - \frac{\text{live egg rate (\%) on treated leaves}}{\text{live egg rate (\%) on untreated leaves}} \right] \cdot 100$$

The results are shown in Table 1.

*Table 1*

| Active ingredient | rate (ppm) | observed (%) | expected (%) |
|---|---|---|---|
| Etoxazole + Abamectin | 0.31+0.11 0.16+0.06 | 100 82.3 | 79.8 40.6 |
| Etoxazole | 0.31 0.16 | 77.7 40.6 | - - |
| Abamectin | 0.11 0.06 | 9.4 0.0 | - - |

Example 2: Two-spotted spider mite (Tetranychus urticae), resistant strain to hexythiazox, pyridaben and/or fenpyroximate

The Example 2 is conducted with use of two-spotted spider mite (resistant strain to hexythiazox, pyridaben and/or fenpyroximate) in a manner similar to that of Example 1. The results are shown in Table 2.

*Table 2*

| Active ingredient | rate (ppm) | observed (%) | expected (%) |
|---|---|---|---|
| Etoxazole + Abamectin | 1.25+0.45 0.63+0.23 | 84.9 17.3 | 16.2 10.1 |

(continued)

| Active ingredient | rate (ppm) | observed (%) | expected (%) |
|---|---|---|---|
| Etoxazole | 1.25 | 10.5 | - |
| | 0.63 | 9.3 | - |
| Abamectin | 0.45 | 6.4 | - |
| | 0.23 | 0.9 | - |

Example 3: Kanzawa spider mite (Tetranychus kanzawai), sensitive strain to hexythiazox, pyridaben and/or fenpyroximate

The Example 3 is conducted with use of kanzawa spider mite (sensitive strain to hexythiazox, pyridaben and/or fenpyroximate) in a manner similar to that of Example 1. The results are shown in Table 3.

*Table 3*

| Active ingredient | rate (ppm) | observed (%) | expected (%) |
|---|---|---|---|
| Etoxazole | 0.31+0.11 | 84.6 | 61.3 |
| + Abamectin | 0.16+0.06 | 23.5 | 10.1 |
| Etoxazole | 0.31 | 60.8 | - |
| | 0.16 | 13.6 | - |
| Abamectin | 0.11 | 1.3 | - |
| | 0.06 | 2.1 | - |

Example 4: Kanzawa spider mite (Tetranychus kanzawai), resistant strain to hexythiazox, pyridaben and/or fenpyroximate

The Example 4 is conducted with use of kanzawa spider mite (resistant strain to hexythiazox, pyridaben and/or fenpyroximate) in a manner similar to that of Example 1. The results are shown in Table 4.

*Table 4*

| Active ingredient | rate (ppm) | observed (%) | expected (%) |
|---|---|---|---|
| Etoxazole | 1.25+0.45 | 93.2 | 83.1 |
| + Abamectin | 0.63+0.23 | 48.4 | 24.5 |
| Etoxazole | 1.25 | 70.1 | - |
| | 0.63 | 19.4 | - |
| Abamectin | 0.45 | 43.6 | - |
| | 0.23 | 6.3 | - |

Example 5: Citrus red mite (Panonychus citri) in mandarin orange

Citrus red mites were infected to leaves of mandarin oranges grown in pots and allowed to propagate for one month. The mandarin oranges were sprayed at the predetermined concentration prepared from a product (e.g. the mixture according to the instant invention). Thereafter, at the described time, the number of live female adults was examined. The results are shown in Table 5.

*Table 5*

| Active Ingredient | rate (ppm) | Number of live female adults/100 leaves | | | | | |
|---|---|---|---|---|---|---|---|
| | | Time elapsed | | | | | |
| | | B.A.* | 4days | 7days | 14days | 21days | 29days |
| Etoxazole + Abamectin | 37.5+ 9 | 210 | 0 | 0 | 0 | 0 | 0 |
| untreated | | 192 | 131 | 235 | 410 | 187 | 203 |
| B. A.: Before Application | | | | | | | |

Example 6: European red mite (Panonychus ulmi) in apple

European red mites were naturally propagated on leaves of apple trees in a field. The apple trees were sprayed at the predetermined concentration prepared from a product (e.g. the mixture according to the instant invention). Thereafter, at the described time, leaves were sampled, and European red mites were collected by a brushing machine. The number of a mixed population (adults, larvae and nymphs) of live European red mites was examined. The results are shown in Table 6.

*Table 6*

| Active Ingredient | rate (ppm) | Number of live European red mites/10 leaves | | | | | |
|---|---|---|---|---|---|---|---|
| | | Time elapsed | | | | | |
| | | B.A.* | 4days | 8days | 13days | 20days | 28days |
| Etoxazole + Abamectin | 37.5+9 | 14.7 | 0.7 | 0.7 | 3.3 | 4.0 | 10.0 |
| untreated | | 15.3 | 37.3 | 38.7 | 48.7 | 74.7 | 86.0 |
| B. A.: Before Application | | | | | | | |

**Claims**

1.  A method of controlling or preventing damage to a plant, which comprises applying to the plant, part of a plant, plant organ, and/or plant propagation material thereof, or surrounding area thereof thereof a combination comprising (I) abamectin, and (II) etoxazole, in any desired sequence or simultaneously.

2.  A method of improving the growth of a plant by applying to the plant, part of a plant, plant organ, and/or plant propagation material thereof, or surrounding area thereof a combination, as defined in claim 1, in any desired sequence or simultaneously.

3.  The method of claim 1 wherein damage is controlled or prevented by controlling or preventing attack on the plant by a pest selected from the class Insecta, Arachnida and Nematoda.

4.  The method according to any one of claims 1 to 3 wherein the weight ratio of (I) to (II) is from 1:100 to 100:1.

5.  The method according to any one of claims 1 to 4 wherein (I) and (II) are applied at a rate of 0.1 to 120 g ai/ha and 50 to 1000 g ai/ha respectively.

6.  The method according to any one of claims 1 to 5 wherein (I) and (II) are applied simultaneously.

7.  The method according to any one of claims 1 to 6 wherein one or more other pesticides are also applied to the plant or surrounding area thereof, wherein each other pesticide can be applied, independently of each other, prior to, simultaneously, or after the application of (I) and (II), and in the instance (I) and (II) are applied separately, each other pesticide can be applied, independently of each other, prior to, simultaneously, between or after the application of (I) and (II).

8.  The method according to any one of claims 1 to 7 wherein abamectin and etoxazole are each in a form of a formulated composition.

9.  The method according to any one of claims 1 to 7 wherein (I) and (II) are together in the form of a single formulated composition, which composition further comprises one or more customary formulation auxiliaries.

10. A composition comprising (I) abamectin and (II) etoxazole.

11. A formulated pre-mix composition comprising (I) abamectin and (II) etoxazole, and one or more customary formulation auxiliaries.

12. A a method of protecting a plant propagation material by applying to the plant propagation material a combination, as defined in any one of claims 1 to 9, in any desired sequence or simultaneousl

13. A plant propagation material treated with the combination defined in any one of claims 1 to 9 or the composition defined in either claim 10 or 11.

Europäisches
Patentamt

European
Patent Office

Office européen
des brevets

# EUROPEAN SEARCH REPORT

Application Number

EP 10 15 1952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RALF NAUEN AND GUY SMAGGHE: "Rapid Report Mode of action of etoxazole" PEST MANAGEMENT SERVICE, WILEY & SONS, BOGNOR REGIS; GB LNKD- DOI:10.1002/PS.1192, vol. 62, 1 January 2006 (2006-01-01), pages 379-382, XP007913590 ISSN: 1526-498X [retrieved on 2006-03-22] * abstract * * page 381, paragraph 3.2 - page 382 * ----- | 1-13 | INV. A01N43/76 A01N43/90 A01P7/02 A01P7/04 A01P5/00 |
| Y | WO 99/18796 A2 (RHONE POULENC AGROCHIMIE [FR]; LEROUX BERNARD [US]; HUBER SCOT KEVIN []) 22 April 1999 (1999-04-22) * page 1, line 1 - page 3, line 15 * * page 5, line 13 - line 22 * * page 17, line 14 - line 20 * * page 27 * ----- | 1-13 | |
| Y | DATABASE WPI Week 200980 Thomson Scientific, London, GB; AN 2009-Q36871 XP002588683 & CN 101 554 171 A (HUNAN WANJIAFENG SCI&TECHNOLOGY CO LTD) 14 October 2009 (2009-10-14) * abstract * ----- | 1-13 | TECHNICAL FIELDS SEARCHED (IPC) A01N |
| L | DATABASE WPI Week 201034 Thomson Scientific, London, GB; AN 2010-E97242 XP002588682 & CN 101 697 726 A (UNIV NANKAI) 28 April 2010 (2010-04-28) * abstract * ----- -/-- | 1-13 | |

The present search report has been drawn up for all claims

| Place of search | Date of completion of the search | Examiner |
|---|---|---|
| Munich | 29 June 2010 | Zanobini, Alessandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 10 15 1952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/048868 A2 (MAKHTESHIM CHEM WORKS LTD [IL]; BARAZANI AVNER [IL]; BARKAI JACOB [IL]) 11 May 2006 (2006-05-11)<br>* page 2, line 9 - line 25 *<br>* page 5, line 19 - line 24 *<br>----- | 1-13 | |
| | | | **TECHNICAL FIELDS SEARCHED (IPC)** |

The present search report has been drawn up for all claims

| Place of search | Date of completion of the search | Examiner |
|---|---|---|
| Munich | 29 June 2010 | Zanobini, Alessandra |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 15 1952

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2010

| Patent document cited in search report | | Publication date | Patent family member(s) | | Publication date |
|---|---|---|---|---|---|
| WO 9918796 | A2 | 22-04-1999 | AU | 1155499 A | 03-05-1999 |
| CN 101554171 | A | 14-10-2009 | NONE | | |
| CN 101697726 | A | 28-04-2010 | NONE | | |
| WO 2006048868 | A2 | 11-05-2006 | AR 051406 A1 | | 10-01-2007 |
| | | | AU 2005302074 A1 | | 11-05-2006 |
| | | | BR PI0516706 A | | 23-09-2008 |
| | | | CA 2585275 A1 | | 11-05-2006 |
| | | | EA 200700809 A1 | | 26-10-2007 |
| | | | EP 1809106 A2 | | 25-07-2007 |
| | | | JP 2008518907 T | | 05-06-2008 |
| | | | KR 20070090902 A | | 06-09-2007 |
| | | | US 2008009452 A1 | | 10-01-2008 |
| | | | ZA 200704448 A | | 28-05-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0374753 A
- WO 9307278 A
- WO 9534656 A
- EP 0427529 A
- EP 451878 A

**Non-patent literature cited in the description**

- **CDC TOMLIN.** e-Pesticide Manual. British Crop Protection Council, 2004
- **COLBY, S.R.** Calculating synergistic and antagonistic responses of herbicide combination. *Weeds,* 1967, vol. 15, 20-22